# EUROPEAN PATENT APPLICATION

(11) **EP 4 706 481 A1**
(43) Date of publication of application: **11.03.2026**
(21) Application number: 24889223.4
(22) Date of filing: 14.08.2024
(51) Int. Cl.: A47L 9/28, A47L 9/04

(54) **ELECTRONIC DEVICE FOR ADAPTIVELY CHANGING CLEANING PATH ON BASIS OF DUST DISTRIBUTION, AND CONTROL METHOD THEREFOR**

(30) Priority: 09.11.2023 KR 20230154360
(71) Applicant: Samsung Electronics Co., Ltd., Suwon-si, Gyeonggi-do 16677 (KR)
(72) Inventor: LEE, Yeongrok, Suwon-si Gyeonggi-do 16677 (KR); HONG, Hyunseok, Suwon-si Gyeonggi-do 16677 (KR); PARK, Sahnggyu, Suwon-si Gyeonggi-do 16677 (KR)
(74) Representative: Gulde & Partner
(86) International application number: PCT/KR2024/096013
(87) International publication number: WO 2025/101037

(57) **Abstract**

An electronic device and a method for controlling the electronic device are disclosed. The electronic device comprises: at least one memory in which one or more instructions are stored and information on a cleaning path and dust distribution information is stored; a driving unit; and one or more processors connected to the at least one memory and the driving unit. When the one or more instructions are executed by the one or more processors, the electronic device may control the driving unit to identify a cleanable area corresponding to at least a part of the cleaning path, and to change the cleaning path on the basis of the cleanable area and the dust distribution information.

## Description

### BACKGROUND

### 1. Field

The disclosure relates to an electronic apparatus and a control method thereof, and more particularly to an electronic apparatus that adaptively changes a cleaning path based on dust distribution and a control method thereof.

### 2. Description of Related Art

With developments in electronic technology, electronic apparatuses that provide various functions are being developed. Specifically, as various robot cleaners are supplied recently and cleaning is performed without specific control by a user, there is improvement in user convenience.

However, as a brush of a robot cleaner of the related art rotates at a constant speed regardless of dust distribution and dust is distributed by the brush, instances of contamination spreading or being re-contaminated may occur. In this case, a level of cleaning difficulty may increase due to dust being driven to a corner.

In addition, because the robot cleaner of the related art cleans an area without taking into consideration the dust distribution, there is a problem of unnecessary power consumption occurring.

Accordingly there is a need for a robot cleaner that reduces unnecessary power consumption and has improved cleaning efficiency.

### SUMMARY

According to an aspect of the disclosure, an electronic apparatus includes: at least one memory storing one or more instructions and further storing information on a cleaning path and dust distribution information; a driver; and one or more processors connected to the at least one memory and to the driver, wherein the one or more processors are configured to execute the one or more instructions, and wherein the one or more instructions, when executed by the one or more processors, are configured to cause the electronic apparatus to: identify a cleanable area corresponding to at least a portion of the cleaning path, and control the driver to change the cleaning path based on the cleanable area and the dust distribution information.

The one or more instructions, when executed by the one or more processors, may be further configured to cause the electronic apparatus to: based on identifying a dust area extending from an inside to an outside of the cleanable area based on the dust distribution information, control the driver to change the cleaning path.

The one or more instructions, when executed by the one or more processors, may be further configured to cause the electronic apparatus to: control the driver to change the cleaning path to correspond with an outer line of the dust area.

The electronic apparatus may further include: a first brush; and a second brush, wherein the one or more instructions, when executed by the one or more processors, may be further configured to cause the electronic apparatus to: based on the electronic apparatus moving along the changed cleaning path, reduce a rotation speed of a brush which is positioned within the dust area from among the first brush and the second brush, and increase a rotation speed of a brush which is not positioned within the dust area from among the first brush and the second brush.

The electronic apparatus may further include: a first brush; and a second brush, wherein the one or more instructions, when executed by the one or more processors, may be further configured to cause the electronic apparatus to: based on the electronic apparatus cleaning the dust area while the electronic apparatus rotates, reverse a rotation direction of the first brush or the second brush based on a rotation direction of the electronic apparatus.

The electronic apparatus may further include: a brush, wherein the one or more instructions, when executed by the one or more processors, may be further configured to cause the electronic apparatus to: based on the electronic apparatus cleaning the dust area along the outer line, change the cleaning path so that the brush is positioned outside of the dust area.

The one or more instructions, when executed by the one or more processors, may be further configured to cause the electronic apparatus to: change the cleaning path to first clean an area outside of the dust area.

The electronic apparatus may further include: a camera, wherein the one or more instructions, when executed by the one or more processors, may be further configured to cause the electronic apparatus to: update the dust area based on an image captured through the camera, control the driver to change the cleaning path to correspond with an outer line of the updated dust area.

The one or more instructions, when executed by the one or more processors, may be further configured to cause the electronic apparatus to: based on a width of the dust area being less than a width of the cleanable area, control the driver to change the cleaning path to correspond with a center of the dust area.

The electronic apparatus may further include: a camera; and an infrared ray emitter, wherein the one or more instructions, when executed by the one or more processors, may be further configured to cause the electronic apparatus to: control the infrared ray emitter to emit infrared rays in a vicinity of the electronic apparatus, obtain an image of the vicinity of the electronic apparatus through the camera while the infrared ray emitter emits the infrared rays, and obtain the dust distribution information based on the image.

According to an aspect of the disclosure, a method of controlling an electronic apparatus includes: identifying a cleanable area corresponding respectively to at least a portion of a cleaning path; and changing the cleaning path based on the cleanable area and dust distribution information.

The changing the cleaning path may include changing the cleaning path based on identifying a dust area extending from an inside to an outside of the cleanable area based on the dust distribution information.

The changing the cleaning path may further include changing the cleaning path to correspond with an outer line of the dust area.

The method may further include: based on the electronic apparatus moving along the changed cleaning path, reducing a rotation speed of a brush which is positioned within the dust area from among a first brush of the electronic apparatus and a second brush of the electronic apparatus, and increasing a rotation speed of a brush which is not positioned within the dust area from among the first brush and the second brush.

The method may further include: based on the electronic apparatus cleaning the dust area while the electronic apparatus rotates, reversing a rotation direction of the first brush or the second brush based on a rotation direction of the electronic apparatus.

According to an aspect of the disclosure, a non-transitory computer readable medium having instructions stored therein, which when executed by at least one processor, cause the at least one processor to execute a method of controlling an electronic apparatus, wherein the method includes: identifying a cleanable area corresponding respectively to at least a portion of a cleaning path; and changing the cleaning path based on the cleanable area and dust distribution information.

With regard to the method executed by the at least one processor based on the instructions stored in the non-transitory computer readable medium, the changing the cleaning path may include changing the cleaning path based on identifying a dust area extending from an inside to an outside of the cleanable area based on the dust distribution information.

With regard to the method executed by the at least one processor based on the instructions stored in the non-transitory computer readable medium, the changing the cleaning path may further include changing the cleaning path to correspond with an outer line of the dust area.

With regard to the method executed by the at least one processor based on the instructions stored in the non-transitory computer readable medium, the method may further include: based on the electronic apparatus moving along the changed cleaning path, reducing a rotation speed of a brush which is positioned within the dust area from among a first brush of the electronic apparatus and a second brush of the electronic apparatus, and increasing a rotation speed of a brush which is not positioned within the dust area from among the first brush and the second brush.

With regard to the method executed by the at least one processor based on the instructions stored in the non-transitory computer readable medium, the method may further include: based on the electronic apparatus cleaning the dust area while the electronic apparatus rotates, reversing a rotation direction of the first brush or the second brush based on a rotation direction of the electronic apparatus.

### BRIEF DESCRIPTION OF THE DRAWINGS

The above and other aspects and features of certain embodiments of the present disclosure will be more apparent from the following description taken in conjunction with the accompanying drawings, in which:
FIG. 1 is a block diagram illustrating a hardware configuration of an electronic apparatus according to an embodiment of the disclosure;
FIG. 2 is a block diagram illustrating a software configuration of an electronic apparatus according to an embodiment of the disclosure;
FIG. 3 is a block diagram illustrating a detailed configuration of an electronic apparatus according to an embodiment of the disclosure;
FIG. 4 is a diagram illustrating information on dust distribution according to an embodiment of the disclosure;
FIG. 5 and FIG. 6 are diagrams illustrating a change in cleaning path according to an embodiment of the disclosure;
FIGS. 7, 8 and 9 are diagrams illustrating a cleaning path for cleaning a dusty area according to an embodiment of the disclosure;
FIGS. 10, 11 and 12 are diagrams illustrating a control method of a plurality of brushes according to an embodiment of the disclosure;
FIG. 13 is a diagram illustrating a control method of one brush according to an embodiment of the disclosure;
FIG. 14 is a diagram illustrating a cleaning area based on a change in cleaning path according to an embodiment of the disclosure; and
FIG. 15 is a flowchart illustrating a control method of an electronic apparatus according to an embodiment of the disclosure.

### DETAILED DESCRIPTION

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope and spirit of the present disclosure. Also, well-known functions or constructions are not described in detail since they would obscure the disclosure with unnecessary detail.

The disclosure will be described in detail below with reference to the accompanying drawings.

Terms used in describing embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the relevant description. Accordingly, the terms used herein are not to be understood simply as its designation but based on the meaning of the term and the overall context of the disclosure.

In the disclosure, expressions such as "have", "may have", "include", and "may include" are used to designate a presence of a corresponding characteristic (e.g., elements such as a numerical value, a function, an operation, or a component), and not to preclude a presence or a possibility of additional characteristics.

As used herein, the expressions "at least one of a, b or c" and "at least one of a, b and c" indicate "only a," "only b," "only c," "both a and b," "both a and c," "both b and c," and "all of a, b, and c."

Expressions such as "1st", "2nd", "first", or "second" used in the disclosure may limit various elements regardless of order and/or importance, and may be used merely to distinguish one element from another element and not limit the relevant element.

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

In the disclosure, the term "user" may refer to a person using an electronic apparatus or an apparatus (e.g., artificial intelligence electronic apparatus) using the electronic apparatus.

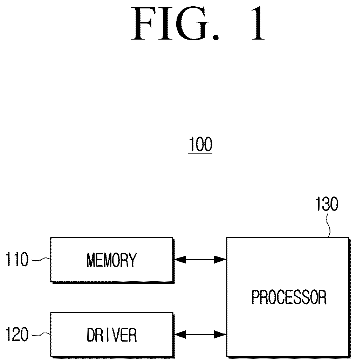

FIG. 1 is a block diagram illustrating a hardware configuration of an electronic apparatus 100 according to an embodiment of the disclosure.

The electronic apparatus 100 may be an apparatus that performs cleaning along a cleaning path. For example, the electronic apparatus 100 may be implemented as a robot cleaner. However, the disclosure is not limited thereto, and the electronic apparatus 100 may be any apparatus so long as it is an apparatus that performs cleaning along a cleaning path.

Referring to FIG. 1, the electronic apparatus 100 may include memory 110, a driver 120, and a processor 130. However the disclosure is not limited thereto, and the electronic apparatus 100 may be implemented in a form with some configurations omitted.

The memory 110 may refer to a hardware that stores information such as data in electric or magnetic form for the processor 130 and the like to access. To this end, the memory 110 may be implemented as at least one hardware from among a non-volatile memory, a volatile memory, a flash memory, a hard disk drive (HDD) or a solid state drive (SSD), a random access memory (RAM), a read only memory (ROM), and the like.

In the memory 110, at least one instruction necessary in an operation of the electronic apparatus 100 or the processor 130 may be stored. Here, the instruction may be a code unit that instructs an operation of the electronic apparatus 100 or the processor 130, and may be prepared in a machine language which is a language that can be understood by a computer. Alternatively, the memory 110 may be configured to store a plurality of instructions that perform a specific work of the electronic apparatus 100 or the processor 130 as an instruction set.

The memory 110 may be configured to store data which is information in a bit or byte unit that can indicate a character, a number, an image, and the like. For example, the memory 110 may be configured to store information on a cleaning path, information on dust distribution, and the like. Alternatively, the memory 110 may be configured to store map information, and in this case, the processor 130 may identify a cleaning path based on the map information. Here, the dust distribution may be information which includes a position of dust on the map information.

The memory 110 may be accessed by the processor 130 and reading, writing, modifying, deleting, updating, and the like of the instruction, the instruction set, or data may be performed by the processor 130.

The driver 120 may be a configuration for moving a position of the electronic apparatus 100 according to a control of the processor 130, and may include a wheel, a motor, and the like. However, the disclosure is not limited thereto, and the driver 120 may be any configuration so long as it is a configuration that can move the position of the electronic apparatus 100.

The processor 130 may control an overall operation of the electronic apparatus 100. Specifically, the processor 130 may control the overall operation of the electronic apparatus 100 by being connected with each configuration of the electronic apparatus 100. For example, the processor 130 may control an operation of the electronic apparatus 100 by being connected with elements such as the memory 110, the driver 120, and the like.

One or more processors 130 may include one or more from among a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 130 may control one or a random combination from among other elements of the electronic apparatus 100, and perform an operation associated with communication or data processing. The one or more processors 130 may execute one or more programs or instructions stored in the memory 110. For example, the one or more processors 130 may perform, by executing one or more instructions stored in the memory 110, a method according to an embodiment of the disclosure.

When a method according to an embodiment of the disclosure includes a plurality of operations, the plurality of operations may be performed by one processor, or performed by a plurality of processors. For example, when a first operation, a second operation, and a third operation are performed by a method according to an embodiment, the first operation, the second operation, and the third operation may all be performed by a first processor, or the first operation and the second operation may be performed by the first processor (e.g., a generic-purpose processor) and the third operation may be performed by a second processor (e.g., an artificial intelligence dedicated processor).

The one or more processors 130 may be implemented as a single core processor that includes one core, or as one or more multicore processors that include a plurality of cores (e.g., a homogeneous multicore or a heterogeneous multicore). If the one or more processors 130 are implemented as a multicore processor, each of the plurality of cores included in the multicore processor may include memory inside the processor such as a cache memory and an on-chip memory, and a common cache shared by the plurality of cores may be included in the multicore processor. In addition, each of the plurality of cores (or a portion from among the plurality of cores) included in the multicore processor may independently read and perform a program command for implementing a method according to an embodiment of the disclosure, or read and perform a program command for implementing a method according to an embodiment of the disclosure due to a whole (or a portion) of the plurality of cores being interconnected.

When a method according to an embodiment of the disclosure includes a plurality of operations, the plurality of operations may be performed by one core from among the plurality of cores or performed by the plurality of cores included in the multicore processor. For example, when a first operation, a second operation, and a third operation are performed by a method according to an embodiment, the first operation, the second operation, and the third operation may all be performed by a first core included in the multicore processor, or the first operation and the second operation may be performed by the first core included in the multicore processor and the third operation may be performed by a second core included in the multicore processor.

In the embodiments of the disclosure, the one or more processors 130 may refer to a system on chip (SoC), a single core processor, or a multicore processor in which the one or more processors and other electronic components are integrated or a core included in the single core processor or the multicore processor, and the core herein may be implemented as the CPU, the GPU, the APU, the MIC, the DSP, the NPU, the hardware accelerator, the machine learning accelerator, or the like, but the embodiments of the disclosure are not limited thereto. However, for convenience of description below, an operation of the electronic apparatus 100 will be described using the expression "processor 130."

The processor 130 may identify a plurality of cleanable areas corresponding respectively to a plurality of paths included in a cleaning path. Here, the cleaning path may be a path for performing cleaning by the electronic apparatus 100 based on map information. The cleanable area may be determined according to a width in which the electronic apparatus 100 can clean while moving in a straight path.

For example, the processor 130 may identify a cleanable area of the straight path based on a size and position of a suction port, a brush, and the like included in the electronic apparatus 100 on a left and right of the straight path included in the cleaning path. For example, if there is a straight path 1 m in length, the processor 130 may identify respective 15 cm areas on the left and right of the straight path as the cleanable area. That is, the cleanable area may be an area which is 1 m in length, and 30 cm in width. Here, the area in which the width is 30 cm may be a cleanable width when the electronic apparatus 100 proceeds in a straight line suctioning dust. The processor 130 may identify the cleanable area for each of the plurality of straight paths included in the cleaning path in the method as described above.

The processor 130 may control the driver 120 to change the cleaning path based on the plurality of cleanable areas and dust distribution. For example, the processor 130 may control, based on a dust area extending from an inside to an outside of one from among the plurality of cleanable areas being identified based on dust distribution, the driver 120 to change the cleaning path.

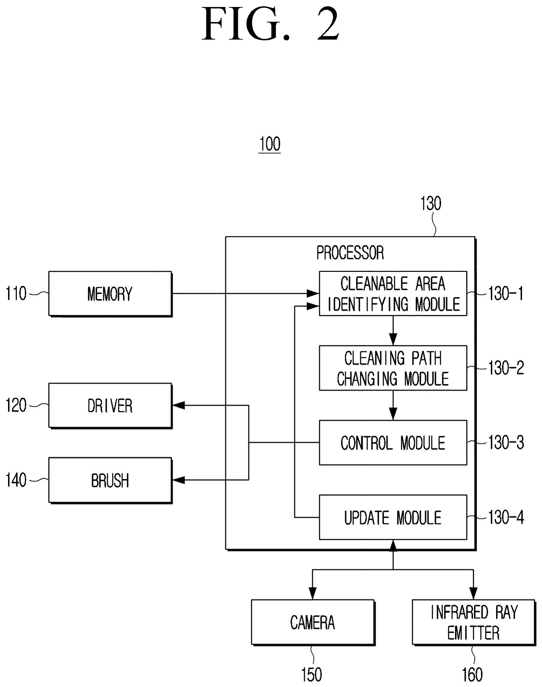

As described above, a problem of dust being distributed may be resolved by changing the cleaning path, and a specific operation of the processor 130 as described will be described in greater detail through the various modules of FIG. 2.

FIG. 2 is a block diagram illustrating a software configuration of the electronic apparatus 100 according to an embodiment of the disclosure. A plurality of modules being positioned inside of the processor 130 in FIG. 2 is to indicate the plurality of modules being loaded (or executed) by the processor 130 and being operated in the processor 130, and the plurality of modules may be in a pre-stored state in the memory 110.

The processor 130 may control an overall operation of the electronic apparatus 100 by executing modules or instructions stored in the memory 110. Specifically, the processor 130 may determine a sequence for reading, interpreting, and data processing the modules or instructions, and accordingly, control an operation of another configuration by transmitting a control signal controlling the operation of another configuration such as the memory 110.

The processor 130 may identify a cleaning path by executing a cleanable area identifying module 130-1, and identify at least one cleanable area which corresponds respectively to at least one straight path included in the cleaning path.

For example, the processor 130 may obtain a cleaning path stored in the memory 110. Alternatively, the processor 130 may obtain a cleaning path based on map information stored in the memory 110.

The processor 130 may identify at least one cleanable area corresponding respectively to at least one straight path included in the cleaning path based on a hardware specification of the electronic apparatus 100. For example, if a cleaning path for a space of 5 m × 90 cm includes a first straight path of 1 m, a second straight path of 1 m, and a third straight path of 1 m, the processor 130 may identify a first cleanable area of a length of 1 m and a width of 30 cm corresponding to the first straight path, a second cleanable area of a length of 1 m and a width of 30 cm corresponding to the second straight path, and a third cleanable area of a length of 1 m and a width of 30 cm corresponding to the third straight path based on a hardware specification such as a size and position of a suction port, a brush, and the like of the electronic apparatus 100. Here, the first cleanable area, the second cleanable area, and the third cleanable area may not be overlapped with one another. The above is because information on the width in which the electronic apparatus 100 can clean while traveling a straight path is taken into consideration in a generating process of the cleaning path.

However, the disclosure is not limited thereto, and a cleaning path may be generated such that a portion of the cleaning area is overlapped. In this case, the cleaning path for the space of 5m × 90 cm may include the first straight path of 1 m, the second straight path of 1 m, the third straight path of 1 m, and a fourth straight path of 1 m, and the processor 130 may identify the first cleanable area of a length of 1 m and a width of 30 cm corresponding to the first straight path, the second cleanable area of a length of 1 m and a width of 30 cm corresponding to the second straight path, the third cleanable area of a length of 1 m and a width of 30cm corresponding to the third straight path, and a fourth cleanable area of a length of 1 m and a width of 30 cm corresponding to the fourth straight path based on a hardware specification of the electronic apparatus 100. Here, adjacent cleanable areas from among the first cleanable area, the second cleanable area, the third cleanable area, and the fourth cleanable area may be overlapped with one another. Through the operation above, cleaning not being carried out properly may be prevented in boundaries of the adjacent cleanable areas.

The processor 130 may change, based on a dust area extending from an inside to an outside of one from among the plurality of cleanable areas being identified based on dust distribution, the cleaning path by executing a cleaning path changing module 130-2.

For example, the processor 130 may change the cleaning path for the dust area to be cleaned along the outer line of the identified dust area. That is, the processor 130 may change, based on a dust area extending from an inside to an outside of the cleanable area being identified while performing cleaning along the straight path, the cleaning path to first clean the dust area along the outer line of the identified dust area. In this case, a problem of dust spreading outwards may be solved because of the electronic apparatus 100 performs cleaning along the outer line of the dust area.

The processor 130 may control the driver 120 to move the electronic apparatus 100 based on the changed cleaning path by executing a control module when the cleaning path is changed.

In addition, the electronic apparatus 100 may further include a brush 140. For example, the electronic apparatus 100 may include a first brush and a second brush, and the processor 130 may be configured to lower a rotation speed of a brush which is positioned within the dust area from among the first brush and the second brush, and raise a rotation speed of a brush which is not positioned within the dust area from among the first brush and the second brush while the dust area is being cleaned based on the changed cleaning path.

For example, the first brush may be disposed at a left side based on a proceeding direction of the electronic apparatus 100, and the second brush is disposed at a right side based on the proceeding direction of the electronic apparatus 100, and if the electronic apparatus 100 performs cleaning along the outer line of the identified dust area, the processor 130 may be configured to lower the rotation speed of the brush which is positioned within the dust area from among the first brush and the second brush, and raise the rotation speed of the brush which is not positioned within the dust area from among the first brush and the second brush. The problem of dust spreading outwards may be prevented as a speed of the brush positioned within the dust area is lowered.

Alternatively, the electronic apparatus 100 may include the first brush and the second brush, and the processor 130 may rotate one from among the first brush and the second brush in an opposite direction based on a rotation direction of the electronic apparatus 100 when cleaning the dust area while rotating the electronic apparatus 100.

For example, the first brush may be disposed at the left side based on the proceeding direction of the electronic apparatus 100 and rotated in a clockwise direction, and the second brush may be disposed at the right side based on the proceeding direction of the electronic apparatus 100 and rotated in an anti-clockwise direction, and if the electronic apparatus 100 is rotated in place in the clockwise direction, the processor 130 may control the second brush to rotate from the anti-clockwise direction to the clockwise-direction. The problem of dust spreading outwards may be prevented through the operation as described above.

In the above, the electronic apparatus 100 has been described as including two brushes, but is not limited thereto. For example, the electronic apparatus 100 may include only one brush, and in this case, the processor 130 may change the cleaning path so that the brush is positioned outside of the dust area and cleans the dust area along the outer line of the identified dust area. That is, the processor 130 may determine the cleaning path by taking into further consideration a number of brushes in addition to the plurality of cleanable areas and dust distribution. If the brush is positioned inside of the dust area, dust may be spread outwards according to the rotation of the brush, but through the operation as described above, the problem as described may not occur.

The processor 130 may first clean the dust area, and update the dust area by executing an update module 130-4. For example, the electronic apparatus 100 may further include a camera 150, and the processor 130 may update, while first cleaning the dust area, the identified dust area based on a captured image captured through the camera 150, and control the driver 120 to clean the dust area according to an outer line of the updated dust area. In an example, the processor 130 may identify dust included in the captured image by inputting the captured image in a neural network model.

Dust distribution may be approximate information, and accuracy thereof may be lower than information identified by the electronic apparatus 100 directly in front thereof while cleaning the dust area. In addition, after dust distribution is obtained, because the dust area may be changed according to dust which is additionally generated, the dust area may be cleaned in an adaptive method through the operation of the processor 130 as describe above, and power consumption may be reduced by avoiding cleaning according to low accuracy or changed dust distribution.

In the above, if the dust area extending from the inside to the outside of the cleaning area is identified, the identified dust area has been described as being first cleaned, but is not limited thereto.

For example, the processor 130 may change, based on a dust area extending from an inside to an outside of one from among the plurality of cleanable areas being identified based on dust distribution, the cleaning path to first clean the outside of the identified dust area by executing the cleaning path changing module 130-2. In an example, the processor 130 may change, based on a dust area extending from an inside to an outside of the cleanable area being identified while cleaning the straight path, the cleaning path to first clean a surrounding of the identified dust area by deviating from the straight path.

The processor 130 may control the driver 120 to move the electronic apparatus 100 based on the changed cleaning path by executing the control module when the cleaning path is changed.

The electronic apparatus 100 may further include the camera 150, and the processor 130 may update, while cleaning the dust area based on the changed cleaning path, the identified dust area based on a captured image captured through the camera 150 by executing the update module 130-4, and control the driver 120 to clean the dust area along the outer line of the identified dust area if a whole area of the identified dust area is identified by executing a control module 130-3.

As described above, dust distribution may be inaccurate, and because it is not real-time information, a more efficient operation through an update operation of the dust distribution through the camera 150 may be possible. In addition, the processor 130 may reduce power consumption by identifying an optimal cleaning path after accurately identifying the whole area of the identified dust area.

In the above, an embodiment of cleaning along the outer line of the identified dust area and the like has been described, but is not limited thereto. For example, the processor 130 may change, based on a width of the identified dust area being less than widths of each of the plurality of cleanable areas, the cleaning path to clean the dust area along a center of the dust area by executing the cleaning path changing module 130-2.

In the above, dust distribution has been described as in a state stored in the memory 110 or the dust distribution being updated through the camera 150, but is not limited thereto.

For example, the electronic apparatus 100 may further include the camera 150 and an infrared ray emitter 160, and the processor 130 may cause infrared rays to be emitted onto the surrounding of the electronic apparatus 100 through the infrared ray emitter 160, obtain a captured image by capturing the surrounding of the electronic apparatus 100 through the camera 150 while the infrared rays are emitted, and obtain dust distribution by identifying whether the infrared rays are reflected in the captured image. In addition, the processor 130 may convert the dust distribution, which is based on the captured image, to a plan view. That is, the processor 130 may convert dust distribution of a camera view to dust distribution of a top view.

The operation as described above may be performed prior to cleaning being started and may be stored in the memory 110, or performed during cleaning in real-time and the dust distribution may be updated.

Alternatively, as described above, the processor 130 may obtain a captured image using only the camera 150, and identify the dust included in the captured image by inputting the captured image in the neural network model.

The processor 130 may identify an optimal path using another neural network model. For example, the processor 130 may identify the optimal path for cleaning a whole area of the dust area by inputting information on the whole area of the dust area in the another neural network model.

A function associated with artificial intelligence according to the disclosure may be operated through the processor 130 and the memory 110.

The processor 130 may be formed of one or a plurality of processors. At this time, the one or plurality of processors may be a generic-purpose processor such as the CPU, the AP, the DSP, and the like, a graphics dedicated processor such as the GPU and a vision processing unit (VPU), or an artificial intelligence dedicated processor such as the NPU.

The one or plurality of processors may control for the input data to be processed according to a pre-defined operation rule or the artificial intelligence model stored in the memory 110. Alternatively, if the one or plurality of processors is the artificial intelligence dedicated processor, the artificial intelligence dedicated processor may be designed to a hardware structure specializing in the processing of a specific artificial intelligence model. The pre-defined operation rule or the artificial intelligence model may be characterized by being created through learning.

Here, "being created through learning" refers to the pre-defined operation rule or artificial intelligence model set to perform a desired feature (or purpose) being created as a basic artificial intelligence model is trained by a learning algorithm using a plurality of learning data. The learning may be carried out in a device itself in which the artificial intelligence according to the disclosure is performed, or carried out through a separate server and/or system. Examples of the learning algorithm may include a supervised learning, an unsupervised learning, a semi-supervised learning, or a reinforcement learning, but is not limited to the above-described examples.

The artificial intelligence model may be formed of a plurality of neural network layers. Each of the plurality of neural network layers may have a plurality of weight values, and perform a neural network computation through a computation between a computation result of a previous layer and the plurality of weight values. The plurality of weight values included in the plurality of neural network layers may be optimized by a learning result of the artificial intelligence model. For example, the plurality of weight values may be updated for a loss value or a cost value obtained from the artificial intelligence model during a learning process to be reduced or minimized.

The artificial neural network may include a Deep Neural Network (DNN), and examples thereof may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Generative Adversarial Network (GAN), a Deep Q-Networks, or the like, but the embodiment is not limited thereto.

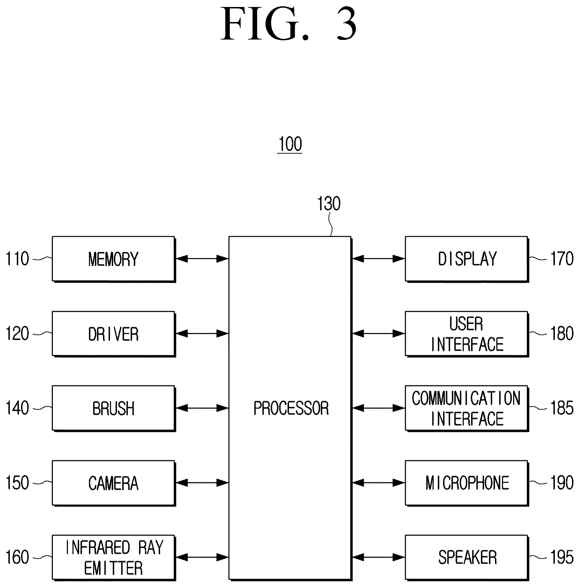

FIG. 3 is a block diagram illustrating a detailed configuration of the electronic apparatus 100 according to an embodiment of the disclosure. The electronic apparatus 100 may include the memory 110, the driver 120, and the processor 130. In addition, referring to FIG. 3, the electronic apparatus 100 may further include, the brush 140, the camera 150, the infrared ray emitter 160, a display 170, a user interface 180, a communication interface 185, a microphone 190, and a speaker 195. Detailed descriptions on portions that overlap with elements shown in FIG. 1 and FIG. 2 from among the elements shown in FIG. 3 will be omitted.

The brush 140 may be a brush of a circular shape for gathering dust to the suction port of the electronic apparatus 100. For example, if the brush 140 is formed at the left side based on the proceeding direction of the electronic apparatus 100, and the suction port is formed at a center part of the electronic apparatus 100, the brush 140 may gather the dust to the suction port by rotating in the clockwise direction. Alternatively, the brush 140 may be formed at the right side based on the proceeding direction of the electronic apparatus 100, and if the suction port is formed at the center part of the electronic apparatus 100, the brush 140 may gather the dust to the suction port by rotating in the anti-clockwise direction.

However, the disclosure is not limited thereto, and the brush 140 may be in any form so long as it is configured to gather the dust toward the suction port of the electronic apparatus 100.

The brush 140 may be implemented in plurality. In this case, rotation directions of each brush 140 may be different.

The camera 150 may be configured to capture a still image or a moving image. The camera 150 may capture the still image at a specific point in time, but may capture the still image consecutively.

The camera 150 may include a lens, a shutter, an aperture, a solid-state imaging device, an Analog Front End (AFE), and a Timing Generator (TG). The shutter may adjust a time during which light reflected from a subject enters the camera 150, and the aperture may adjust an amount of light incident to the lens by mechanically increasing or decreasing a size of an opening part through which light enters. The solid-state imaging device may output, based on light reflected from the subject being accumulated as photo charge, an image by the photo charge as an electric signal. The TG may output a timing signal for reading out pixel data of the solid-state imaging device, and the AFE may digitalize the electric signal output from the solid-state imaging device by sampling.

The infrared ray emitter 160 may be configured to emit infrared rays to a front direction of the electronic apparatus 100. However, the disclosure is not limited thereto, and the infrared ray emitter 160 may be in any form so long as it is configured to emit infrared rays toward a capturing direction of the camera 150. For example, if the camera 150 is rotatable, the infrared ray emitter 160 may also be implemented in a rotatable form together with the camera 150. Alternatively, if the camera 150 is able to capture all directions, the infrared ray emitter 160 may also be implemented to emit infrared rays in all directions.

The infrared ray emitter 160 may be substituted with a configuration that emits light of a wavelength which can identify dust.

The display 170 may be configured to display an image, and may be implemented as a display of various forms such as a liquid crystal display (LCD), an organic light emitting diode (OLED) display, and a plasma display panel (PDP). In the display 170, a driving circuit, which may be implemented in a form of an a-si TFT, a low temperature poly silicon (LTPS) TFT, an organic TFT (OTFT), or the like, a backlight unit, and the like may be included. The display 170 may be implemented as a touch screen coupled with a touch sensor, a flexible display, a three-dimensional display (3D display), or the like.

The user interface 180 may be implemented as a button, a touch pad, a mouse, a keyboard, and the like, or implemented also as a touch screen capable of performing a display function and an operation input function together therewith. Here, the button may be a button of various types such as a mechanical button, a touch pad, or a wheel which is formed at a random area at a front surface part or a side surface part, a rear surface part, or the like of an exterior of a main body of the electronic apparatus 100.

The communication interface 185 may be configured to communicate with external apparatuses of various types according communication methods of various types. For example, the electronic apparatus 100 may perform communication with a server or a user terminal device through the communication interface 185.

The communication interface 185 may include a Wi-Fi module, a Bluetooth module, an infrared communication module, a wireless communication module, and the like. Here, each communication module may be implemented in at least one hardware chip form.

The Wi-Fi module and the Bluetooth module may perform communication in a Wi-Fi method and a Bluetooth method, respectively. When using the Wi-Fi module or the Bluetooth module, various connection information such as a service set identifier (SSID) and a session key may first be transmitted and received, and after communicatively connecting using the same, various information may be transmitted and received. The infrared communication module may perform communication according to an infrared communication (Infrared Data Association (IrDA)) technology of transmitting data wirelessly in short range by using infrared rays present between visible rays and millimeter waves.

The wireless communication module may include at least one communication chip that performs communication according to various wireless communication protocols such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like, in addition to the above-described communication methods.

Alternatively, the communication interface 185 may include a wired communication interface such as, for example, and without limitation, HDMI, DP, Thunderbolt, USB, RGB, D-SUB, DVI, and the like.

In addition thereto, the communication interface 185 may include at least one from among the wired communication modules that perform communication using a local area network (LAN) module, an Ethernet module, or a pair cable, a coaxial cable or an optical fiber cable, or the like.

The processor 130 may receive information on the cleaning path or dust distribution from the user terminal device through the communication interface 185. For example, the user terminal device may identify dust distribution through a camera, and provide the information on dust distribution to the electronic apparatus 100.

The microphone 190 may be configured to receive input of a sound and converting to an audio signal. The microphone 190 may be electrically connected with the processor 130, and may receive sound by a control of the processor 130.

For example, the microphone 190 may be formed as an integrated-type integrated to an upper side or a front surface direction, a side surface direction or the like of the electronic apparatus 100. Alternatively, the microphone 190 may be provided in a remote controller, or the like separate from the electronic apparatus 100. In this case, the remote controller may receive sound through the microphone 190, and provide the received sound to the electronic apparatus 100.

The microphone 190 may include various elements such as a microphone that collects sound in an analog form, an amplifier circuit that amplifies the collected sound, an A/D converter circuit that samples the amplified sound and converts to a digital signal, a filter circuit that removes noise components from the converted digital signal, and the like.

The microphone 190 may be implemented in a form of a sound sensor, and may be any method so long as it is a configuration that can collect sound.

The speaker 195 may be an element that outputs not only various audio data processed in the processor 130, but also various notification sounds, voice messages, or the like.

As described above, the electronic apparatus 100 may change the cleaning path based on the cleanable area and dust distribution, and reduce power consumption while enhancing cleaning efficiency by adaptively setting an optimal path.

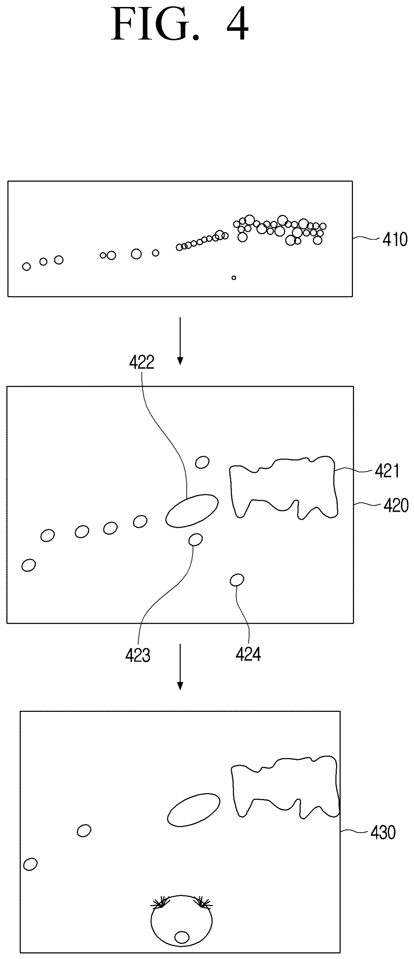

An operation of the electronic apparatus 100 will be described in greater detail below through FIG. 4 through FIG. 14. In FIG. 4 through FIG. 14, individual embodiments will be described for convenience of description. However, the individual embodiments of FIG. 4 through FIG. 14 may be realized in any combined state.

FIG. 4 is a diagram illustrating information on dust distribution according to an embodiment of the disclosure.

The processor 130 may cause infrared rays to be emitted onto the surrounding of the electronic apparatus 100 through the infrared ray emitter 160, obtain a captured image by capturing the surrounding of the electronic apparatus 100 through the camera 150 while emitting the infrared rays, and obtain dust distribution by identifying whether the infrared rays are reflected in the captured image.

For example, the processor 130 may cause infrared rays to be emitted toward the front direction of the electronic apparatus 100 through the infrared ray emitter 160 as shown in FIG. 4, and obtain a captured image 410 by capturing the front direction of the electronic apparatus 100 through the camera 150 while emitting the infrared rays. Here, the captured image 410 may be a camera view. The processor 130 may convert the captured image 410 to a top view, identify dust 421, 422, 423 and 424 by identifying whether the infrared rays are reflected in a captured image 420 which is converted to a top view, and obtain dust distribution which includes dust of greater than or equal to a preset number from among therefrom. Here, the dust distribution may be information which includes dust distributed in an area of greater than or equal to a preset size such as 421 and 422 in the captured image 420 which is converted to the top view, and may be represented as 430.

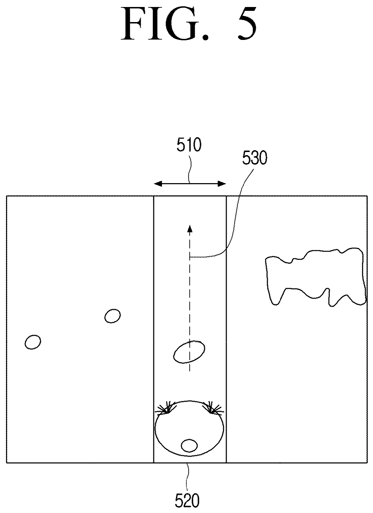

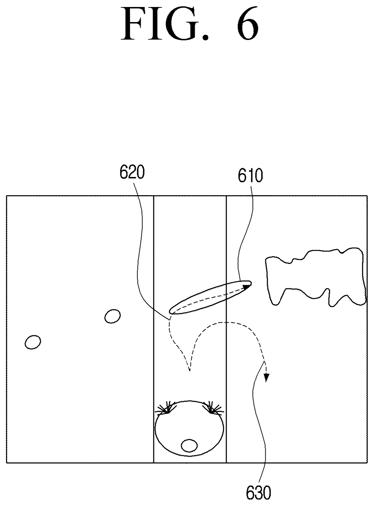

FIG. 5 and FIG. 6 are diagrams illustrating a change in cleaning path according to an embodiment of the disclosure.

The processor 130 may identify the plurality of cleanable areas corresponding respectively to the plurality of straight paths included in the cleaning path, and control the driver 120 to change the cleaning path based on the plurality of cleanable areas and dust distribution. For example, the processor 130 may identify a cleanable area 520 corresponding to an initial path 530 (e.g., a straight path) as shown in FIG. 5. Here, the cleaning path may be an initial path on which the electronic apparatus 100 performs cleaning based on map information, and the cleanable area 520 may be determined according to a width 510 with which the electronic apparatus 100 can clean while moving on an initial path (e.g., a straight path).

The processor 130 may determine whether the cleaning path is changed based on the cleanable area and dust distribution. For example, the processor 130 may perform, based on the dust distribution being included within the cleanable area 520 as shown in FIG. 5, cleaning based on the straight path without changing the cleaning path. Alternatively, the processor 130 may control, based on a dust area 610 extending from an inside to an outside of the cleanable area 520 being identified based on the dust distribution as shown in FIG. 6, the driver 120 to change the cleaning path to a path such as path 620 or path 630. If the dust area 610 extending from the inside to the outside of the cleanable area 520 is cleaned with the straight path 530 in FIG. 5, dust may be dispersed at a vicinity of a boundary of the cleanable area 520 by the brush 140 that is rotating. Accordingly, a problem of dust being dispersed may be solved by changing the cleaning path in a manner similar to path 620 or path 630.

For convenience of description below, a first mode has been described as a mode that first cleans the dust area 610 extending from the inside to the outside of the cleanable area 520 along path 620, and a second mode has been described as a mode that later cleans the dust area 610 extending from the inside to the outside of the cleanable area 520 along path 630.

The processor 130 may change a mode of the electronic apparatus 100 based on a user input. For example, the processor 130 may change the cleaning path to first clean the dust area 610 extending from the inside to the outside of the cleanable area 520 according to a user command that corresponds to the first mode. Alternatively, the processor 130 may change the cleaning path to later clean the dust area extending from the inside to the outside of the cleanable area 520 according to a user command that corresponds to the second mode.

However, the disclosure is not limited thereto, and the mode may be automatically changed. For example, the processor 130 may change the mode of the electronic apparatus 100 based on the size of the dust area 610 extending from the inside to the outside of the cleanable area 520. In an example, the processor 130 may operate in the first mode if a whole area of the dust area 610 extending from the inside to the outside of the cleanable area 520 can be identified based on dust distribution, and operate in the second mode if it cannot be identified. This is because dust distribution does not include information on dust of all areas, but that it is limited to an area that can be identified through the camera 150 from a current apposition of the electronic apparatus 100. That is, if the electronic apparatus 100 is moved, dust distribution may include information on dust of a wider area, and accordingly, the processor 130 may identify that the size of the dust area 610 can be greater. In this case, rather than first cleaning the dust area 610, identifying the whole area of the dust area 610 and then cleaning the identified whole area may be advantageous from a power consumption aspect in that a moving path of the electronic apparatus 100 can be efficiently changed.

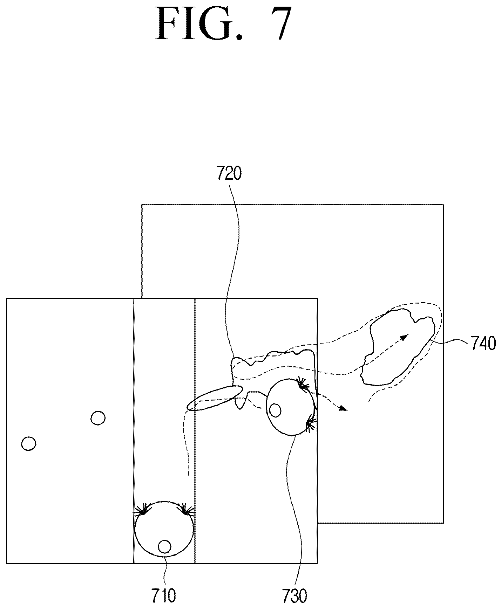

FIG. 7 through FIG. 9 are diagrams illustrating a cleaning path for cleaning a dust area according to an embodiment of the disclosure.

FIG. 7 is a diagram illustrating an example of the electronic apparatus 100 being in a first mode. For example, the processor 130 may identify, while the electronic apparatus 100 is at a first position 710, a dust area 720 extending from an inside to an outside of the cleanable area based on dust distribution. The processor 130 may change, because the electronic apparatus 100 is in the first mode, the cleaning path to first clean the identified dust area 720. Here, the processor 130 may change the cleaning path to clean the dust area 720 along the outer line of the identified dust area.

The processor 130 may update, while cleaning the dust area 720 based on the changed cleaning path, the identified dust area based on the captured image captured through the camera 150, and control the driver 120 to clean the dust area along the outer line of the identified dust area when the whole area of the identified dust area is identified. For example, the processor 130 may identify, while the electronic apparatus 100 is at a second position 730 cleaning the dust area 720 based on the changed cleaning path, an additional dust area 740 based on the captured image captured through the camera 150, and control the driver 120 to clean the dust area along the outer line of the whole area which includes the dust area 720 and the additional dust area 740.

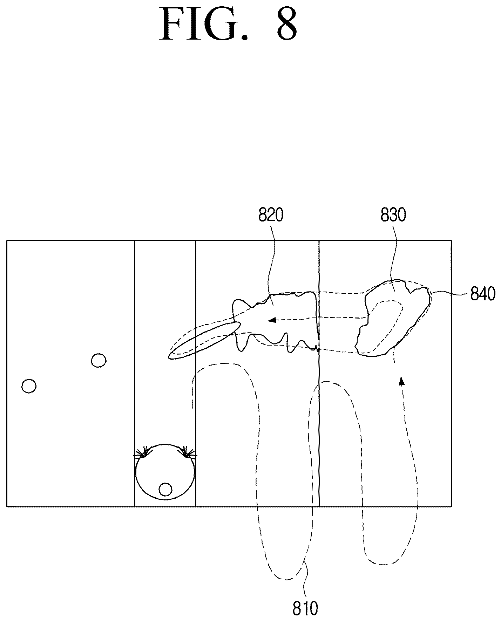

FIG. 8 is a diagram illustrating an example of the electronic apparatus 100 being in a second mode. For example, the processor 130 may identify a dust area 820 extending from an inside to an outside of the cleanable area based on dust distribution. The processor 130 may change, because the electronic apparatus 100 is in the second mode, the cleaning path to first clean an outside of the identified dust area 820. In an example, the processor 130 may first clean the outside of the identified dust area 820 along a first path 810.

The processor 130 may update, while cleaning an outside of the dust area 820 based on the first path 810, the identified dust area based on a captured image captured through the camera 150, and control the driver 120 to clean the dust area along the outer line of the identified dust area when a whole area of the identified dust area is identified. For example, the processor 130 may identify an additional dust area 830 based on a captured image captured through the camera 150 while cleaning the outside of the dust area 820 based on the first path 810, and change the cleaning path based on the dust area 820 and the additional dust area 830. In an example, the processor 130 may clean the dust area 820 and the additional dust area 830 together with a second path 840 after performing cleaning as with the first path 810. Here, the processor 130 may clean the dust area 820 and the additional dust area 830 along outer lines of the dust area 820 and the additional dust area 830.

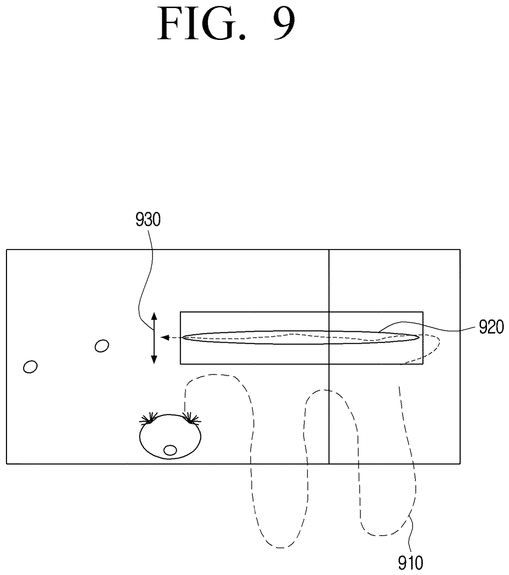

FIG. 9 is a diagram illustrating an example of the electronic apparatus 100 being in a second mode. For example, the processor 130 may update, while cleaning an outside of a dust area 920 based on a first path 910, the dust area 920 based on a captured image captured through the camera 150, and change, based on a width of the dust area 920 being less than a width 930 of a cleanable area, the cleaning path to clean the dust area 920 along a center of the dust area.

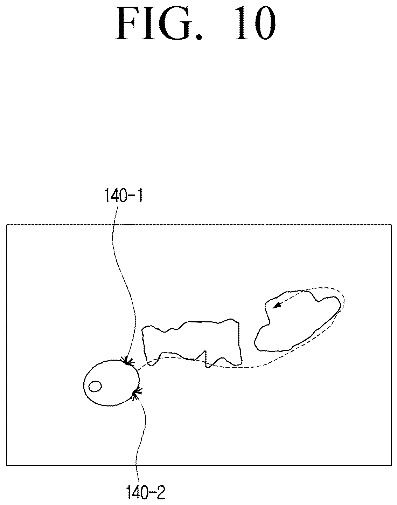

FIG. 10 through FIG. 12 are diagrams illustrating a control method of a plurality of brushes according to an embodiment of the disclosure.

The processor 130 may control the driver 120 to clean the dust area along the outer line of the dust area.

The electronic apparatus 100 may include a first brush 140-1 disposed at the left side based on the proceeding direction and a second brush 140-2 disposed at the right side based on the proceeding direction, and the processor 130 may lower, while cleaning the dust area, the rotation speed of the brush which is positioned within the dust area from among the first brush 140-1 and the second brush 140-2, and raise the rotation speed of the brush which is not positioned within the dust area from among the first brush 140-1 and the second brush 140-2. For example, the processor 130 may reduce, while cleaning the dust area along the outer line of the dust area as shown in FIG. 10, the rotation speed of the first brush 140-1, and increase the rotation speed of the second brush 140-2. If the rotation speed of the first brush 140-1 positioned with in the dust area is high, dust may be dispersed, but the problem of dust being dispersed may be solved through the operation as described above.

The processor 130 may control the first brush 140-1 to rotate in the clockwise direction, and control the second brush 140-2 to rotate in the anti-clockwise direction. Through the rotation of the brush as described above, the dust may be gathered to the center part of the electronic apparatus 100.

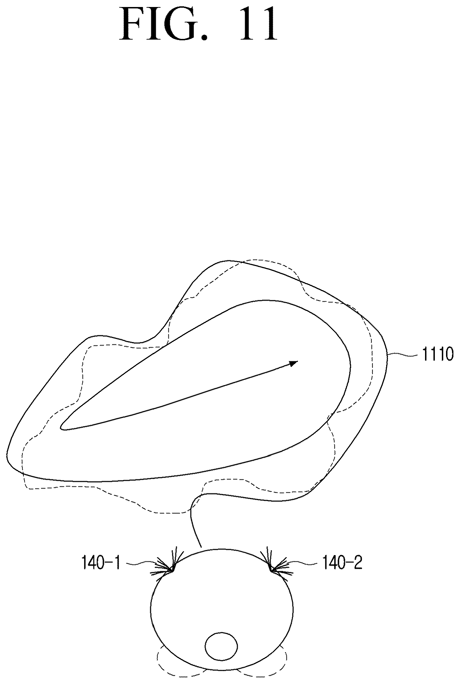

The processor 130 may clean the dust area along the outer line of the dust area. The processor 130 may clean the dust area along the outer line of the dust area, and update the dust area by excluding the dust area in which cleaning is completed from an existing dust area. Accordingly, the processor 130 may clean the dust area along the outer line of the dust area, and clean, based on the dust area becoming smaller due to the dust area being updated as a result of cleaning being completed, the dust area along the outer line of the dust area which has become smaller. That is, the cleaning path may be in a form 1110 rotating in a direction from the outside toward the center part of the dust area as shown in FIG. 11.

The processor 130 may rotate, based on cleaning the dust area while rotating the electronic apparatus 100, one from among the first brush 140-1 and the second brush 140-2 in an opposite direction based on the rotation direction of the electronic apparatus 100.

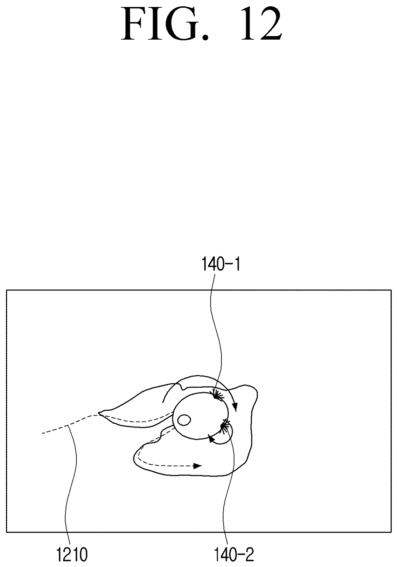

For example, the processor 130 may perform cleaning along a 1210 path as shown in FIG. 12. At this time, the processor 130 may control the driver 120 for the electronic apparatus to not move and rotate in place in the clockwise direction from a concave portion from among the dust area. The processor 130 may control, while the electronic apparatus 100 is rotating in place in the clockwise direction, the second brush 140-2 to rotate from the anti-clockwise direction to the clockwise direction. The problem of dust spreading to the outside may be prevented through the operation described above.

In FIG. 10 through FIG. 12, the rotation direction of the brush has been described, but the processor 130 may change not only the rotation direction of the brush but also a suction intensity of dust. For example, the processor 130 may maintain the suction intensity of dust to a first intensity based on the electronic apparatus 100 being positioned outside of the dust area, and maintain the suction intensity of dust to a second intensity which is stronger than the first intensity based on the electronic apparatus 100 being positioned inside of the dust area.

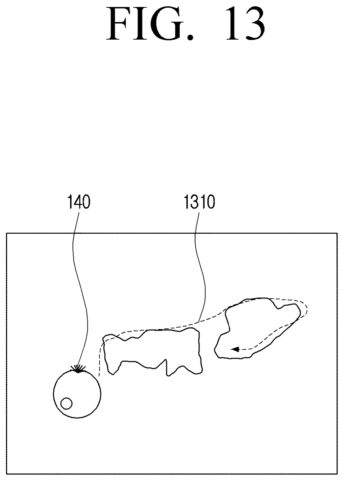

FIG. 13 is a diagram illustrating a control method of one brush according to an embodiment of the disclosure.

In FIG. 10 through FIG. 12, the electronic apparatus 100 has been described as including two brushes, but is not limited thereto, and the electronic apparatus 100 may include only one brush.

In this case, the processor 130 may take into further consideration a number of brushes, a position of the brush, and the like in a process of determining the cleaning path. For example, the processor 130 may control the driver 120 to perform cleaning along the outer line 1310 from the right side of the dust area because there is only one brush 140 of the electronic apparatus 100, and the brush 140 is formed at the left side of the proceeding direction as shown in FIG. 13. Through the operation described above, the brush 140 is rotated from the outside of the dust area, and the problem of dust being spread outside may be solved according to the rotation of the brush 140.

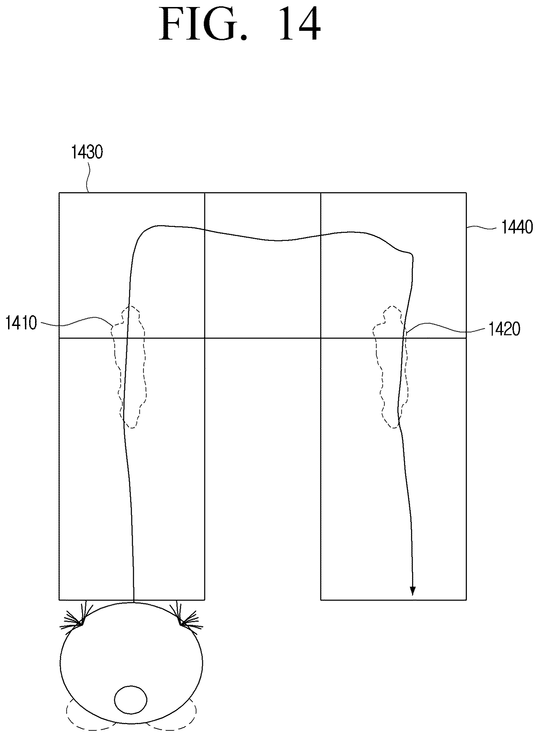

FIG. 14 is a diagram illustrating a cleaning area based on a change in cleaning path according to an embodiment of the disclosure.

The electronic apparatus 100 may provide a mode which cleans a whole area and a mode which cleans by selecting only a dust area.

For example, if the electronic apparatus 100 is in the mode which cleans the whole area, the processor 130 may sequentially clean the whole area based on map information without consideration of dust distribution.

Alternatively, if the electronic apparatus 100 is in the mode which cleans by selecting only the dust area, the processor 130 may set the cleaning path based on dust distribution, and an area in which cleaning is not performed may be generated. For example, the processor 130 may perform cleaning with a second straight path 1440 based on a second dust area 1420 after performing cleaning with a first straight path 1430 based on a first dust area 1410 as shown in FIG. 14. In this case, an area between the first straight path 1430 and the second straight path 1440 may be an area in which cleaning is not performed. Through the operation described above, most of the dust area may be cleaned while reducing cleaning time and power consumption.

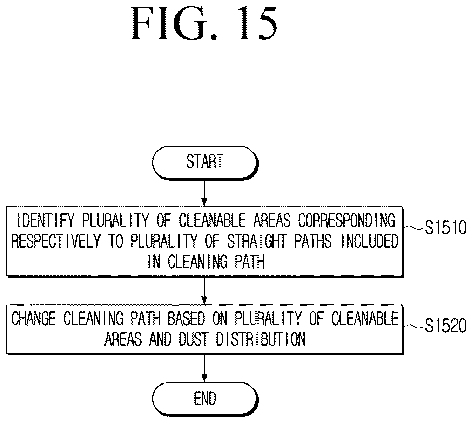

FIG. 15 is a flowchart illustrating a control method of an electronic apparatus according to an embodiment of the disclosure.

First, the plurality of cleanable areas corresponding respectively to the plurality of straight paths included in the cleaning path may be identified (S1510). Then, the cleaning path may be changed based on the plurality of cleanable areas and dust distribution (S1520).

In addition, the cleaning (S1520) may include changing the cleaning path based on a dust area extending from and inside to an outside of one from among the plurality of cleanable areas being identified based on dust distribution.

Then, the changing (S1520) may include changing the cleaning path to clean the dust area along the outer line of the identified dust area.

In addition, an operation of lowering, while cleaning the dust area based on the changed cleaning path, the rotation speed of the brush which is positioned within the dust area from among the first brush and the second brush included in the electronic apparatus, and raising the rotation speed of the brush which is not positioned within the dust area from among the first brush and the second brush may be further included.

Further, an operation of rotating, based on the electronic apparatus cleaning the dust area while rotating, one from among the first brush and the second brush included in the electronic apparatus in the opposite direction based on the rotation direction of the electronic apparatus may be further included.

In addition, the changing (S1520) may include changing the cleaning path so that the brush included in the electronic apparatus is positioned outside of the dust area and cleans the dust area along the outer line of the identified dust area.

Then, the changing (S1520) may include changing the cleaning path to first clean the outside of the identified dust area.

In addition, an operation of updating, while cleaning the dust area based on the changed cleaning path, the identified dust area based on a captured image captured through the camera included in the electronic apparatus and an operation of cleaning the dust area along the outer line of the identified dust area when the whole area of the identified dust area is identified may be further included.

Then, the changing (S1520) may include changing, based on the width of the identified dust area being less than the widths of the plurality of cleanable areas, the cleaning path to clean the dust area along the center of the dust area.

In addition, an operation of emitting infrared rays at the surrounding of the electronic apparatus through the infrared ray emitter included in the electronic apparatus, an operation of obtaining a captured image by capturing the surrounding of the electronic apparatus through the camera included in the electronic apparatus while emitting the infrared rays, and an operation of obtaining dust distribution by identifying whether infrared rays are reflected in the captured image may be further included.

According to the various embodiments of the disclosure as described above, the electronic apparatus may change the cleaning path based on the cleanable area and dust distribution, and reduce power consumption while raising cleaning efficiency based on adaptively setting the optimal path.

According to an embodiment of the disclosure, the various embodiments described above may be implemented with software including instructions stored in a machine-readable storage media (e.g., computer). The machine may call an instruction stored in a storage medium, and as an apparatus operable according to the called instruction, may include the electronic apparatus (e.g., electronic apparatus (A)) according to the above-mentioned embodiments. Based on a command being executed by a processor, the processor may directly or using other elements under the control of the processor perform a function relevant to the command. The command may include a code generated by a compiler or executed by an interpreter. The machine-readable storage medium may be provided in a form of a non-transitory storage medium. Herein, 'non-transitory' merely means that the storage medium is tangible and does not include a signal, and the term does not differentiate data being semi-permanently stored or being temporarily stored in the storage medium.

In addition, according to an embodiment of the disclosure, a method according to the various embodiments described above may be provided included a computer program product. The computer program product may be exchanged between a seller and a purchaser as a commodity. The computer program product may be distributed in a form of the machine-readable storage medium (e.g., a compact disc read only memory (CD-ROM)), or distributed online through an application store (e.g., PLAYSTORE^{™}). In the case of online distribution, at least a portion of the computer program product may be stored at least temporarily in the storage medium such as a server of a manufacturer, a server of an application store, or memory of a relay server, or temporarily generated.

In addition, according to an embodiment of the disclosure, the various embodiments described above may be implemented in a recordable medium which is readable by the computer or an apparatus similar to the computer using software, hardware, or a combination thereof. In some cases, the embodiments described herein may be implemented by the processor itself. According to a software implementation, embodiments such as procedures and functions described herein may be implemented with separate software modules. Each of the above-described software modules may perform one or more of the functions and operations described herein.

Computer instructions for performing processing operations of the machine according to the various embodiments described above may be stored in a non-transitory computer-readable medium. The computer instructions stored in this non-transitory computer-readable medium may cause a specific device to perform the processing operations in the machine according to the above-described various embodiments when executed by the processor of the specific device. The non-transitory computer-readable medium may refer to a medium that stores data semi-permanently rather than storing data for a very short time, such as a register, a cache, memory, or the like, and is readable by the machine. Specific examples of the non-transitory computer-readable medium may include, for example, and without limitation, a compact disc (CD), a digital versatile disc (DVD), a hard disc, a Blu-ray disc, a USB, a memory card, a ROM, and the like.

In addition, respective elements (e.g., a module or a program) according to various embodiments described above may be formed of a single entity or a plurality of entities, and some sub-elements of the above-mentioned sub-elements may be omitted or other sub-elements may be further included in the various embodiments. Alternatively or additionally, some elements (e.g., modules or programs) may be integrated into one entity to perform the same or similar functions performed by the respective relevant elements prior to integration. Operations performed by a module, a program, or other element, in accordance with the various embodiments, may be executed sequentially, in parallel, repetitively, or in a heuristically manner, or at least some operations may be performed in a different order, omitted, or a different operation may be added.

While example embodiments of the disclosure have been illustrated and described above, it will be understood that the disclosure is intended to be illustrative, not limiting. It will be understood by those skilled in the art that various changes in form and details may be made therein without departing from the true spirit and full scope of the disclosure, including the appended claims and their equivalents.

## Claims

1. An electronic apparatus comprising:
at least one memory storing one or more instructions and further storing information on a cleaning path and dust distribution information;
a driver; and
one or more processors connected to the at least one memory and to the driver,
wherein the one or more processors are configured to execute the one or more instructions,
and
wherein the one or more instructions, when executed by the one or more processors, are configured to cause the electronic apparatus to:
identify a cleanable area corresponding to at least a portion of the cleaning path,
and
control the driver to change the cleaning path based on the cleanable area and the dust distribution information.

2. The electronic apparatus of claim 1, wherein the one or more instructions, when executed by the one or more processors, are further configured to cause the electronic apparatus to:
based on identifying a dust area extending from an inside to an outside of the cleanable area based on the dust distribution information, control the driver to change the cleaning path.

3. The electronic apparatus of claim 2, wherein the one or more instructions, when executed by the one or more processors, are further configured to cause the electronic apparatus to:
control the driver to change the cleaning path to correspond with an outer line of the dust area.

4. The electronic apparatus of claim 3, further comprising:
a first brush; and
a second brush,
wherein the one or more instructions, when executed by the one or more processors, are further configured to cause the electronic apparatus to:
based on the electronic apparatus moving along the changed cleaning path, reduce a rotation speed of a brush which is positioned within the dust area from among the first brush and the second brush, and increase a rotation speed of a brush which is not positioned within the dust area from among the first brush and the second brush.

5. The electronic apparatus of claim 3, further comprising:
a first brush; and
a second brush,
wherein the one or more instructions, when executed by the one or more processors, are further configured to cause the electronic apparatus to:
based on the electronic apparatus cleaning the dust area while the electronic apparatus rotates, reverse a rotation direction of the first brush or the second brush based on a rotation direction of the electronic apparatus.

6. The electronic apparatus of claim 3, further comprising:
a brush,
wherein the one or more instructions, when executed by the one or more processors, are further configured to cause the electronic apparatus to:
based on the electronic apparatus cleaning the dust area along the outer line, change the cleaning path so that the brush is positioned outside of the dust area.

7. The electronic apparatus of claim 2, wherein the one or more instructions, when executed by the one or more processors, are further configured to cause the electronic apparatus to:
change the cleaning path to first clean an area outside of the dust area.

8. The electronic apparatus of claim 7, further comprising:
a camera,
wherein the one or more instructions, when executed by the one or more processors, are further configured to cause the electronic apparatus to:
update the dust area based on an image captured through the camera,
control the driver to change the cleaning path to correspond with an outer line of the updated dust area.

9. The electronic apparatus of claim 2, wherein the one or more instructions, when executed by the one or more processors, are further configured to cause the electronic apparatus to:
based on a width of the dust area being less than a width of the cleanable area, control the driver to change the cleaning path to correspond with a center of the dust area.

10. The electronic apparatus of claim 1, further comprising:
a camera; and
an infrared ray emitter,
wherein the one or more instructions, when executed by the one or more processors, are further configured to cause the electronic apparatus to:
control the infrared ray emitter to emit infrared rays in a vicinity of the electronic apparatus,
obtain an image of the vicinity of the electronic apparatus through the camera while the infrared ray emitter emits the infrared rays, and
obtain the dust distribution information based on the image.

11. A method of controlling an electronic apparatus, the method comprising:
identifying a cleanable area corresponding respectively to at least a portion of a cleaning path; and
changing the cleaning path based on the cleanable area and dust distribution information.

12. The method of claim 11, wherein the changing the cleaning path comprises changing the cleaning path based on identifying a dust area extending from an inside to an outside of the cleanable area based on the dust distribution information.

13. The method of claim 12, wherein the changing the cleaning path further comprises changing the cleaning path to correspond with an outer line of the dust area.

14. The method of claim 13, further comprising:
based on the electronic apparatus moving along the changed cleaning path, reducing a rotation speed of a brush which is positioned within the dust area from among a first brush of the electronic apparatus and a second brush of the electronic apparatus, and increasing a rotation speed of a brush which is not positioned within the dust area from among the first brush and the second brush.

15. The method of claim 14, further comprising:
based on the electronic apparatus cleaning the dust area while the electronic apparatus rotates, reversing a rotation direction of the first brush or the second brush based on a rotation direction of the electronic apparatus.
